# EUROPÄISCHE PATENTSCHRIFT

(11) **EP 3 510 300 B1**
(45) Veröffentlichungstag und Bekanntmachung des Hinweises auf die Patenterteilung: **08.01.2020**
(21) Anmeldenummer: 17768060.0
(22) Anmeldetag: 08.09.2017
(51) Int. Cl.: F16D 65/52, F16D 65/56

(54) **NACHSTELLER FÜR EIN BREMSSYSTEM**
ADJUSTER FOR A BRAKING SYSTEM
DISPOSITIF DE RATTRAPAGE DE JEU POUR SYSTÈME DE FREINAGE

(30) Priorität: 09.09.2016 DE 102016116961
(43) Veröffentlichungstag der Anmeldung: 17.07.2019
(73) Patentinhaber: SAF-HOLLAND GmbH, 63856 Bessenbach (DE)
(72) Erfinder: DREWES, Olaf, 63743 Aschaffenburg (DE)
(74) Vertreter: Müller Schupfner & Partner Patent- und Rechtsanwaltspartnerschaft mbB
(86) Internationale Anmeldenummer: PCT/EP2017/072579
(87) Internationale Veröffentlichungsnummer: WO 2018/046661

(56) Entgegenhaltungen:
- GB-A- 699 726
- US-A- 3 999 636
- US-A- 4 380 276

## Beschreibung

Die vorliegende Erfindung betrifft einen Nachsteller für ein Bremssystem, insbesondere für ein als Trommelbremse ausgelegtes Bremssystem.

Nachstellvorrichtungen für Bremssysteme sind aus dem Stand der Technik bereits bekannt. Dabei werden üblicherweise verschiedene mit Gewinden ausgestattete Elemente miteinander kombiniert, deren relative Verdrehung zueinander eine Vergrößerung der Länge bzw. der Erstreckung der Elemente verursacht. Diese relative Verdrehung der jeweiligen Nachstellelemente zueinander wird dabei über Kupplungen und entsprechende Betätigungsmechanismen erreicht. Insbesondere ist ein Nachsteller für eine Trommelbremse bekannt, bei welchem an dem Betätigungskolben der Trommelbremse ein Stellelement über eine Schrägverzahnung eingreift. Dabei wird, um ausreichendes Lüftspiel für die Trommelbremse zu gewährleisten, bei einer Betätigung der Bremse zunächst stets ein axiales Verschieben des Stellelements längs seiner Drehachse zugelassen, bevor nach Anschlagen des Stellelements an einer Haltegeometrie eine weitere Verlagerung des Betätigungskolbens zu einer Verdrehung des Stellelements führt. Es hat sich gezeigt, dass diese axiale Verschiebung des Stellelements mitunter zu einem Verkanten und Festsetzen des Stellelements führen kann, wobei kein ausreichendes Lüftspiel für die Bremsbacken der Trommelbremse mehr gewährleistet ist. Hierdurch kann es zum dauerhaften Anliegen der Bremsbacken an der Bremstrommel und somit zu einem sogenannten "Heißläufer" kommen.

Die US 4,380,276 A offenbart einen Nachstellmechanismus für eine S-Nockenbremse, wobei die Nachstellung insbesondere über ein Schneckengetriebe, welches mit dem Stellelement zum Antrieb der S-Nocken in Verbindung steht, realisiert wird.

Aufgabe der vorliegenden Erfindung ist die Bereitstellung eines verbesserten Nachstellers zum Einsatz in Bremssystemen, bei welchem insbesondere die Gefahr von Heißläufern minimiert ist. Weiterhin soll der Nachsteller möglichst kompakt ausgebildet sein und in bereits vorhandene Bremssysteme integrierbar oder nachrüstbar sein.

Diese Aufgaben werden gelöst mit einem Nachsteller gemäß Anspruch 1. Weitere Vorteile und Merkmale der Erfindung ergeben sich aus den abhängigen Ansprüchen.

Erfindungsgemäß umfasst der Nachsteller ein Stellelement und eine Halteeinheit, wobei das Stellelement um eine Stellachse drehbar und gegen Verlagerung längs der Stellachse gesichert ist, wobei die Halteeinheit einen ersten Haltebereich und einen zweiten Haltebereich aufweist, wobei der erste Haltebereich mit einem ersten Eingriffsbereich des Stellelements in Eingriff steht oder bringbar ist, um ein Drehmoment um die Stellachse zu übertragen, wobei der zweite Haltebereich direkt oder indirekt an einem Gehäuse festgelegt und gegen Verlagerung um die Stellachse gesichert ist, wobei zwischen dem ersten Haltebereich und dem ersten Eingriffsbereich ein Spiel vorgesehen ist, innerhalb dessen eine Drehung des Stellelements relativ zur Halteeinheit um die Stellachse möglich ist. Als Nachsteller im Sinne der vorliegenden Erfindung wird insbesondere eine Kombination von Bauteilen bezeichnet, die in das Gehäuse der Stell- oder Betätigungseinheit eines Bremssystems, wie beispielsweise einer Trommelbremse oder einer Scheibenbremse, eingebaut werden können und welche eine Nachstellung der Betätigungskolben bzw. Betätigungselemente des Bremssystems ermöglichen. Das Stellelement ist dabei vorzugsweise ein im Wesentlichen rotationssymmetrisch ausgebildetes Bauteil, welches um eine Stellachse drehbar und gegen Verlagerung längs oder parallel zu dieser Stellachse gesichert innerhalb des Gehäuses des Bremssystems angeordnet ist. Das Stellelement weist dabei einen ersten Eingriffsbereich auf, welcher dazu ausgelegt ist, in einen ersten Haltebereich der Halteeinheit einzugreifen. Vorzugsweise ist dabei entweder der erste Haltebereich oder der erste Eingriffsbereich als Aussparung bzw. als Rücksprung an dem jeweiligen Bauteil ausgebildet, wobei der jeweils andere Bereich, Haltebereich oder Eingriffsbereich, als entsprechend korrespondierender Vorsprung ausgebildet ist. Die Halteeinheit weist neben dem ersten Haltebereich weiterhin einen zweiten Haltebereich auf, welcher direkt oder indirekt an dem Gehäuse des Bremssystems festgelegt und gegen Verlagerung und Verdrehung relativ zum Gehäuse gesichert ist. Der zweite Haltebereich ist dafür ausgelegt, in einem bestimmten Betriebszustand des Nachstellers ein Drehmoment vom Gehäuse des Bremssystems über den ersten Haltebereich, den ersten Eingriffsbereich und über einen Eingriff des Stellelements an ein Betätigungselement des Bremssystems zu übertragen, um auf diese Weise eine Nachstellung am Betätigungselement zu erreichen. Entscheidendes Merkmal der vorliegenden Erfindung ist, dass zwischen dem ersten Haltebereich und dem ersten Eingriffsbereich jeweils ein Spiel vorhanden ist, welches eine bestimmte relative Drehung des ersten Eingriffsbereiches zum ersten Haltebereich zulässt, bevor ein Formschluss zwischen dem ersten Haltebereich und dem ersten Eingriffsbereich hergestellt wird. Dieses Spiel ermöglicht somit eine freie Drehung des Stellelements um einen bestimmten Verdrehwinkel und somit auch eine bestimmte Verlagerung des Betätigungselements des Bremssystems um einen bestimmten Betrag. Dieser Betrag, um welchen das Betätigungselement des Bremssystems verschoben werden kann, ohne dass eine Nachstellung stattfindet, wird als Lüftspiel bezeichnet. Die Größe des Lüftspiels ist dabei unmittelbar einstellbar über die Größe des Spiels zwischen dem ersten Haltebereich und dem ersten Eingriffsbereich. Im Gegensatz zu den aus dem Stand der Technik bekannten Nachstellern wird somit das Lüftspiel im Fall der vorliegenden Erfindung nicht mehr über eine axiale Verschiebung oder axiale Verlagerung des Stellelements ermöglicht, sondern durch einen bestimmten Verdrehbereich, in welchem das Stellelement frei verdrehbar ist, bevor ein formschlüssiger Eingriff mit der Halteeinheit stattfindet. Der Vorteil dieser erfindungsgemäßen Ausführung ist, dass eine Lagerung des Stellelements, bei welcher lediglich die Drehbarkeit um die Stellachse gewährleistet werden muss, wesentlich weniger anfällig gegenüber Verkanten ist als eine Lagerung eines Stellelements, welches sowohl axial verschiebbar als auch drehbar gelagert sein soll. Es kann auf diese Weise die Betriebssicherheit des Bremssystems deutlich verbessert werden, da ein Verkanten des Stellelements so gut wie ausgeschlossen ist. Weiterhin verringert sich durch die nicht mehr benötigte axiale Verschiebbarkeit des Stellelements auch die Baulänge des Nachstellers, wodurch insgesamt der vom Nachsteller im Bremssystem benötigte Bauraum reduziert werden kann. Darüber hinaus lässt sich auch das Gewicht des Nachstellers senken, da sowohl der Gehäusebereich, welcher zur Aufnahme des Nachstellers bereitgestellt werden muss, als auch der Nachsteller, insbesondere das Stellelement selbst, kürzer und somit kompakter ausgeführt werden können, wobei eine Gewichtsreduzierung verzeichnet wird.

Besonders bevorzugt ist der Eingriff zwischen dem ersten Eingriffsbereich und dem ersten Haltebereich formschlüssig. Ein formschlüssiger Eingriff ermöglicht insbesondere die Übertragung größerer Drehmomente als ein kraftschlüssiger Eingriff beider Bereiche. Weiterhin lässt sich der formschlüssige Eingriff durch entsprechende Geometrien genau an die zu übertragenden Drehmomente anpassen, wodurch ein ausreichendes aber nicht übertriebenes Maß an Überdimensionierung der entsprechenden, das Drehmoment bzw. die Kraft übertragenden Abschnitte an dem ersten Eingriffsbereich und dem ersten Haltebereich möglich wird. Insbesondere für den bevorzugten Fall, dass der Nachsteller auch eine Überlastkupplung aufweist, kann somit der erste Eingriffsbereich und der erste Haltebereich jeweils sehr knapp, das heißt mit nur wenig Überdimensionierung, an das jeweils zu übertragende Drehmoment angepasst werden, ab welchem die Überlastkupplung einen weiteren Anstieg des auf den ersten Eingriffsbereich und den ersten Haltebereich wirkenden Drehmoments verhindert.

Ferner bevorzugt weist das Stellelement an seinem dem ersten Eingriffsbereich gegenüberliegend angeordneten Ende einen zweiten Eingriffsbereich auf, wobei der zweite Eingriffsbereich mit einem Betätigungselement eines Bremssystems in Eingriff steht und wobei zwischen dem Betätigungselement und dem zweiten Eingriffsabschnitt ein Schraubradgetriebe gebildet ist. Der zweite Eingriffsbereich des Stellelements ist vorzugsweise ein Zahnrad mit einer Schrägverzahnung. Dabei ist der zweite Eingriffsbereich in einer ersten bevorzugten Ausführungsform einstückig mit dem Stellelement, bzw. mit dem Schaft des Stellelements, ausgebildet.

Alternativ bevorzugt, um eine Austauschbarkeit einzelner, dem Verschleiß unterliegender Komponenten zu ermöglichen, kann der zweite Eingriffsbereich auch als separates Bauteil auf den Schaft aufgeschoben werden, wobei eine klassische Welle-Nabe-Verbindung hergestellt wird, über welche ein Drehmoment zwischen dem zweiten Eingriffsbereich und dem im Wesentlichen rotationssymmetrisch ausgebildeten Schaft des Stellelements übertragbar ist. Das durch die Schrägverzahnung des ersten Eingriffsbereiches sowie die korrespondierende Schrägverzahnung an dem Betätigungselement des Bremssystems erzeugte Schraubradgetriebe setzt dabei eine Längsbewegung des Betätigungselements, im Wesentlichen quer zur Stellachse in eine Drehbewegung des Stellelements um die Stellachse um. Dabei gleiten die jeweiligen Schrägverzahnungsflanken unter gleichzeitiger Verdrehung zunächst nur des Stellelements aneinander, wobei das Stellelement so lange drehbar ist, bis das Spiel ausgeschöpft ist. Anschließend ist eine weitere Verdrehung des Stellelements verhindert und eine weitere Verlagerung des Betätigungselements quer zur Stellachse führt zu einer Verdrehung des Betätigungselements um seine eigene Achse (Betätigungsachse). Diese Verdrehung des Betätigungselements sorgt für ein Ausschrauben eines mit dem Betätigungselement verbundenen Stützelements, wobei dieses Ausschrauben eine Nachstellung des Bremssystems bewirkt. Der Vorteil bei der Verwendung einer Schrägverzahnung ist, dass zum Antrieb der Nachstellvorrichtung das erforderliche Drehmoment ausschließlich durch die Verlagerungsbewegung des Betätigungselements des Bremssystems bereitgestellt wird. Es ist somit für die Nachstellung kein weiteres Antriebssystem, wie beispielsweise ein Elektromotor oder eine Nachstellung von Hand durch einen Anwender, nötig.

Ferner bevorzugt führt eine Verlagerung des Betätigungselements relativ zum Stellelement zu einer Verdrehung des Stellelements um die Stellachse, wobei hierbei eine Verlagerung des Stellelements längs der Stellachse im Wesentlichen verhindert ist. Dass eine Verlagerung des Stellelements im Wesentlichen verhindert ist, bedeutet im Fall der vorliegenden Erfindung, dass ein gewisses Spiel des Stellelements selbstverständlich vorhanden sein muss, um die Drehbarkeit des Stellelements um die Stellachse zu gewährleisten. Insofern ist also im Rahmen eines gewissen Spieles des Stellelements auch eine sehr geringe Verlagerung des Stellelements längs der Stellachse bzw. parallel zur Stellachse möglich. Größere Verlagerungen des Stellelements längs der Stellachse, insbesondere um das Lüftspiel des Bremssystems bereitzustellen, sind aber im Rahmen der vorliegenden Erfindung ausgeschlossen.

Wie bereits zuvor beschrieben greift der zweite Eingriffsbereich mit einer Schrägverzahnung in eine vorzugsweise am äußeren, im Wesentlichen zylindrisch ausgebildeten Umfangsrand des Betätigungselements des Bremssystems ausgebildete Schrägverzahnung ein. Hierdurch wird ein Schraubradantrieb zwischen dem Betätigungselement und dem zweiten Eingriffsbereich des Stellelements bereitgestellt. Die Herstellung von Schrägverzahnungen ist mit hoher Genauigkeit möglich und die übertragbaren Drehmomente sind, bei relativ geringem Verschleiß der Zähne, hoch.

Bevorzugt ist eine Verdrehung des Stellelements um einen Spielwinkel ohne Drehmomentübertragung an die Halteeinheit möglich, wobei bei einer Drehung des Stellelements um einen Winkel, welcher größer als der Spielwinkel ist, ein Formschluss zwischen dem ersten Eingriffsbereich und dem ersten Haltebereich gebildet ist bzw. wird, über welchen ein Drehmoment zwischen dem Stellelement und der Halteeinheit übertragbar ist. Der Spielwinkel definiert mit anderen Worten das im Bremssystem zur Verfügung stehende Lüftspiel.

Solange die Verlagerungsbewegung des Betätigungselements somit innerhalb eines bestimmten Bereiches bleibt und der Spielwinkel bei Verdrehung des Stellelements nicht vollständig ausgeschöpft wird, findet keine Drehmomentübertragung zwischen dem Stellelement und der Halteeinheit statt. Bei einer Betätigung und bei einer Entspannung der jeweiligen Bremse durch Verlagerung des Betätigungselements kann somit das Stellelement, ohne dass von der Halteeinheit ein Drehmoment auf das Stellelement übertragen wird, im Wesentlichen frei drehen. Erfindungsgemäß beträgt der Spielwinkel dabei 3° bis 30°, vorzugsweise 5° bis 20°. Es hat sich gezeigt, dass in diesem Bereich, jeweils in Kombination mit der geeigneten Schrägung der Schrägverzahnung ein optimales Lüftspiel bereitgestellt werden kann.

Bevorzugt weist die Halteeinheit eine Kupplung auf, welche eine Drehbewegung des ersten Haltebereiches relativ zum zweiten Haltebereich in nur einer Drehrichtung um die Stellachse verhindert. Eine solche Kupplung wird auch als eindirektionale Kupplung bezeichnet. Mit anderen Worten ermöglicht diese Kupplung, dass sich die beiden Bauteile, von denen an einem ersten Bauteil der erste Haltebereich und an einem zweiten Bauteil der zweite Haltebereich vorgesehen ist, in einer Richtung relativ zueinander drehen können, während in der entgegen gerichteten Richtung eine Drehung durch die Einwegkupplung im Wesentlichen verhindert wird. Die Kupplung sorgt somit dafür, dass sofern das Spiel der Verdrehung des Stellelements überschritten wird, der Betrag, um welchen das Spiel überschritten wurde, bei einer Entlastung der Bremse nicht wieder zurückgedreht werden kann und somit eine effektive Nachstellung des Bremssystems erfolgt.

Besonders bevorzugt weist die Kupplung eine Planverzahnung auf, welche derart ausgebildet ist, dass in einer ersten Umfangsrichtung um die Stellachse ein sich selbst verstärkender formschlüssiger Eingriff zwischen den Haltebereichen, bzw. den Bauteilen, an welchen die Haltebereiche vorgesehen sind, hergestellt ist, wobei in einer zweiten Umfangsrichtung um die Stellachse die Haltebereiche unter Überwinden eines geringen Widerstandes gegeneinander drehbar sind. Als geringer Widerstand im Sinne der vorliegenden Erfindung wird beispielsweise der Reibungswiderstand der überwunden werden muss, um die beiden aneinander gleitenden Teile einer Verzahnung gegeneinander drehen zu können, bezeichnet. Gering ist dieser Widerstand daher, dass er gegenüber dem in der entgegengesetzten Richtung hergestellten Widerstand durch den Formschluss nur ein Bruchteil des Drehmoments zwischen den beiden Bauteilen verursacht. Gegebenenfalls muss zusätzlich noch die Kraftkomponente einer Federvorspannung, welche die Kupplung zusammendrückt, und welche in Umfangsrichtung wirkt, überwunden werden. Mit anderen Worten ist aber der geringe Widerstand, welcher in dieser Drehrichtung zwischen den beiden Bauteilen der Halteeinheit wirkt, wesentlich geringer als der Widerstand gegen Relativverdrehung, welcher durch den sich selbst verstärkenden Formschluss in der entgegengesetzten Drehrichtung hergestellt wird.

Insbesondere bevorzugt weist die Planverzahnung dabei im Querschnitt Sägezahnförmige Vorsprünge und entsprechend korrespondierende Rücksprünge auf. Eine sägezahnförmige Planverzahnung, das heißt eine Verzahnung, bei welcher die jeweils in einer Drehrichtung um die Stellachse weisende Flanke einen wesentlich geringeren Anstieg aufweist, als die gegenüberliegende Flanke, ist besonders einfach herzustellen und kann auf einfache Weise einen sich selbst verstärkenden Formschluss zwischen den beiden Bauteilen der Halteeinheit, an denen der erste Haltebereich und der zweite Haltebereich vorgesehen sind, herstellen.

Vorzugsweise ist ein Rückstellmittel vorgesehen, welches den ersten Haltebereich gegen den zweiten Haltebereich vorspannt, um einen Formschluss in der Kupplung zu halten. Das Rückstellelement ist dabei vorzugsweise eine Spiralfeder, welche besonders günstig zu beschaffen sind und gleichzeitig noch zur Rückstellung der Drehwinkelposition der angrenzenden Bauteile zueinander einsetzbar ist. Die vom Rückstellmittel aufzubringende Kraft ist relativ gering, da einerseits der in der ersten, einen Drehmoment übertragenden Richtung, wirkende Formschluss mit Vorteil selbstverstärkend ist und in diesem Zustand kein Anpressen der beiden relativ zueinander beweglichen Teile der Kupplung nötig ist. Zum anderen soll der Gleitwiderstand in der entgegengesetzten Drehrichtung möglichst gering gehalten werden. Gleichzeitig kann das Rückstellmittel, welches als Torsions- oder Spiralfeder ausgebildet ist, zusätzlich als Torsionsfeder genutzt werden, um den ersten Haltebereich im unbelasteten Zustand des Bremssystems stets in die Lage zurückzudrehen, in welcher das maximale Spiel zwischen dem ersten Haltebereich und dem ersten Eingriffsbereich vorliegt.

Weiterhin bevorzugt ist ein Rücksteller vorgesehen, welcher ausgelegt ist, eine Kraft auf den ersten Haltebereich zu übertragen, um den formschlüssigen Eingriff zwischen dem ersten und dem zweiten Haltebereich zu lösen, wobei die Kraft der vom Rückstellmittel aufgebrachten Kraft entgegenwirkt. Der Rücksteller ist vorzugsweise ein Bauteil, welches von außerhalb des Nachstellers bzw. von außerhalb des Bremssystems betätigt werden kann, um eine der Rückstellkraft des Rückstellmittels entgegenwirkende Kraft auf den ersten Haltebereich, bzw. das den ersten Haltebereich aufweisende Bauteil, zu übertragen. Hierdurch kann der Anwender den zwischen dem ersten und zweiten Haltebereich in der Kupplung wirkenden Formschluss lösen und anschließend das Stellelement gemeinsam mit dem ersten Haltebereich manuell in eine gewünschte Lage drehen. Dieser Rücksteller wird, wie sein Name schon sagt, insbesondere zur Rückstellung des Nachstellers verwendet. Eine Rückstellung ist dann erforderlich, wenn neue Bremsbeläge eingesetzt werden und die für die Verwendung der alten abgenutzten Bremsbeläge vorgenommene Nachstellung rückgängig gemacht werden muss.

Vorzugsweise ist der erste Eingriffsbereich als Aussparung ausgebildet, wobei der erste Haltebereich als Vorsprung ausgebildet ist, dessen radiale Erstreckung um die Stellachse im Wesentlichen gleich der radialen Erstreckung des ersten Haltebereiches ist. Als im Wesentlichen gleiche Erstreckung in radialer Richtung um die Stellachse wird dabei eine Erstreckung bezeichnet, welche bei dem als Vorsprung ausgebildeten ersten Haltebereich lediglich um ein gewisses Spielmaß kleiner ist als die radiale Erstreckung des ersten Eingriffsbereiches, welcher als Aussparung ausgebildet ist. Dies ist notwendig, um eine Verschiebung des ersten Haltebereiches relativ zum ersten Eingriffsbereich ohne Verklemmen zu ermöglichen. Dabei ist es erforderlich, dass das Spiel ausreichend groß gestaltet ist, um ein Verkanten oder ein Festsetzen des ersten Haltebereiches im ersten Eingriffsbereich zu verhindern. Gleichzeitig soll aber die radiale Erstreckung des ersten Haltebereiches möglichst nah an der radialen Erstreckung des ersten Eingriffsbereiches liegen, um ausreichende Materialstärken, insbesondere des ersten Haltebereiches, welcher als Vorsprung ausgebildet ist, zu gewährleisten. Hierdurch können die im Material wirkenden Spannungen bei der Übertragung großer Drehmomente minimiert werden. Der Bereich des Stellelements, in welchem der erste Eingriffsbereich angeordnet ist, ist dabei vorzugsweise scheibenförmig oder als lokale Verdickung des Stellelements ausgeführt. Hierdurch können insbesondere größere Hebelarme für die Drehmomentübertragung angewandt werden, wodurch sich die Materialspannungen im ersten Eingriffsbereich sowie im ersten Haltebereich verringern.

Ferner bevorzugt ist der erste Eingriffsbereich als Aussparung ausgebildet und der erste Haltebereich als Vorsprung ausgebildet, wobei die umfängliche Erstreckung des ersten Eingriffsbereiches um die Stellachse größer als ein 1,5-faches der umfänglichen Erstreckung des ersten Haltebereiches um die Stellachse ist. Als umfängliche Erstreckung wird dabei insbesondere die Erstreckung längs einer in einer orthogonal zur Stellachse liegenden Ebene liegenden Kreisabschnittslänge bezeichnet, welche insbesondere an der mittleren radialen Erstreckung des ersten Eingriffsbereiches und/oder des ersten Haltebereiches gemessen wird. Der erste Eingriffsbereich ist dabei mit anderen Worten vorzugsweise als Kreisringsegment ausgebildet, welches eine längere umfängliche Erstreckung aufweist als der vorzugsweise ebenfalls als Kreisringsegment mit der im Wesentlichen selben radialen Erstreckung ausgebildete erste Haltebereich. Es hat sich dabei gezeigt, dass ein Verhältnis der umfänglichen Erstreckung des ersten Eingriffsbereiches relativ zum ersten Haltebereich von 1,5 einen ausgezeichneten Kompromiss aus einer einerseits ausreichenden umfänglichen Erstreckung des ersten Haltebereiches, um ausreichend hohe Drehmomente übertragen zu können, als auch einem ausreichend großen Spiel, welches durch die zusätzliche größere umfängliche Erstreckung des ersten Eingriffsbereiches ermöglicht wird, bereitzustellen.

In einer bevorzugten Ausführungsform ist die umfängliche Erstreckung des ersten Eingriffsbereiches ein 1,5- bis 4-faches und vorzugsweise ein 2- bis 2,5-faches der umfänglichen Erstreckung des ersten Haltebereiches. Vorzugsweise, um insbesondere bei einer geringen Schrägung der am zweiten Eingriffsbereich vorgesehenen Schrägverzahnung ein ausreichend großes Spiel bereitzustellen, ist die umfängliche Erstreckung des ersten Eingriffsbereiches maximal ein 4-faches der umfänglichen Erstreckung des ersten Haltebereiches. Dies liegt darin begründet, dass bei einer Schrägverzahnung für dasselbe am Betätigungselement wirkende Drehmoment ein geringeres Drehmoment im Stellelement und somit ein geringeres von der Halteeinheit auf den ersten Eingriffsabschnitt übertragenes Drehmoment erforderlich ist, wobei jedoch im Ausgleich hierfür ein größeres Spiel zur Bereitstellung des ausreichenden Lüftspieles bereitgestellt werden muss. Der Bereich von 1,5 bis 4 dieses umfänglichen Erstreckungsverhältnisses hat sich dabei als geeigneter Bereich erwiesen, welcher sämtliche der Anforderungen an Nachstellsysteme in verschiedenen Trommel- oder Scheibenbremssystemen erlaubt. Bei Trommelbremsen ist aufgrund der stärkeren Veränderungen des Bremssystems unter Hitzeeinwirkung, insbesondere durch die größere Ausdehnung der Bremstrommel relativ zum restlichen Bremssystem, ein Bereich von 2 bis 2,5 für das eben genannte Verhältnis bevorzugt, da hier das Lüftspiel stets etwas größer gehalten werden muss und die für die Betätigung der Trommelbremse nötigen Kräfte geringer sind als bei einem Scheibenbremssystem.

Vorzugsweise weist das Stellelement einen dritten Eingriffsbereich auf, welcher zum Eingriff mit einem Werkzeug durch einen Anwender ausgelegt ist. Der dritte Eingriffsbereich findet sich vorzugsweise an dem, dem zweiten Eingriffsbereich gegenüberliegenden, distalen Ende, welches bevorzugt aus dem Gehäuse des Bremssystems herausragt. Dabei weist der dritte Eingriffsbereich vorzugsweise eine Außensechskantgeometrie auf, an welcher ein entsprechender Schlüssel durch einen Anwender in Eingriff gebracht werden kann. Der dritte Eingriffsbereich dient dabei insbesondere der Ermöglichung der Rückstellung des Nachstellers durch den Anwender durch manuelle Einbringen eines Drehmoments.

Vorzugsweise ist der Rücksteller dabei derart angeordnet, dass er beim Ansetzen des Werkzeuges an den dritten Eingriffsbereiches betätigt wird. Mit anderen Worten ragt der Rücksteller somit im Bereich des dritten Eingriffsbereiches derart aus dem Gehäuse heraus, dass beim Ansetzen des Werkzeuges an den dritten Eingriffsbereich zunächst der Rücksteller in das Gehäuse hineingedrückt wird, wodurch der erste Haltebereich außer Eingriff mit dem zweiten Haltebereich gebracht wird. Anschließend kann in dieser Stellung über das Werkzeug, welches vom Anwender betätigt wird, ein Drehmoment auf das Stellelement übertragen werden, welches eine Rückstellung des Bremssystems ermöglicht. Es hat sich gezeigt, dass diese sehr kompakte und fehlerunanfällige Anordnung des Rückstellers relativ zum dritten Eingriffsbereich einen äußerst großen ergonomischen Fortschritt bei der Rückstellung des Nachstellers erlaubt.

Weitere Vorteile und Merkmale der vorliegenden Erfindung ergeben sich aus der nachfolgenden Beschreibung mit Bezug auf die beigefügten Figuren.

Es zeigen:
- Fig. 1: eine teilweise geschnittene Ansicht einer ersten bevorzugten Ausführungsform eines Nachstellers, welcher in einem Bremssystem angeordnet ist,
- Fig. 2: eine teilweise geschnittene Ansicht einer zweiten bevorzugten Ausführungsform eines Nachstellers, und
- Fig. 3: die in Fig. 2 gekennzeichnete Schnittansicht im Bereich des ersten Eingriffs- und Haltebereiches.

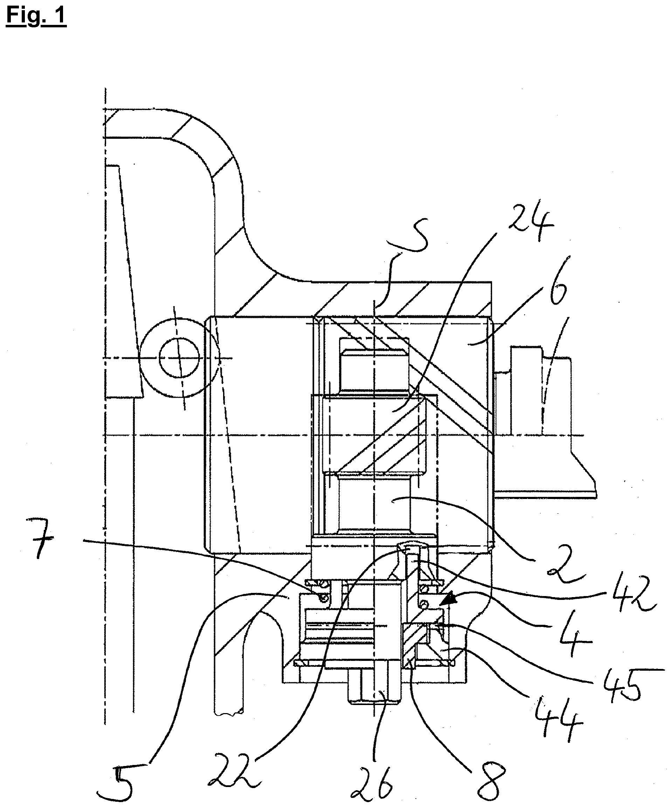

Fig. 1 zeigt schematisch eine teilweise geschnittene Ansicht durch ein als Spreizkeileinheit ausgebildetes Bremssystem. Gezeigt ist die rechte Hälfte der Spreizkeileinheit, wobei die sich links an die Strichpunktlinie anschließende, nicht gezeigte Hälfte der Spreizkeileinheit vorzugsweise identisch ausgebildet ist. Dabei ist für die Nachstellung des dort gezeigten Bremssystems eine bevorzugte Ausführungsform des erfindungsgemäßen Nachstellers in das Gehäuse 5 integriert. Der Nachsteller weist dabei ein Stellelement 2 und eine Halteeinheit 4 auf. Das Stellelement 2 ist innerhalb des durch eine Doppel-Punkt-Strichlinie angedeuteten Hohlraumes im Gehäuse 5 des Bremssystems angeordnet, wobei es drehbar um eine Stellachse S und gegen Verlagerung längs oder parallel zur Drehachse S gesichert ist. Angedeutet ist, dass der zweite Eingriffsbereich 24 des Stellelements 2 eine Schrägverzahnung aufweist, welche korrespondierend zu einer an dem Betätigungselement 6 des Bremssystems ausgebildeten Schrägverzahnung ausgebildet ist. Das Betätigungselement 6 ist vorzugsweise eine Hülse, welche mit einem Innengewinde ausgestattet ist, in welchen das schematisch dargestellte Druckübertragungselement eingeschraubt ist. Durch eine Verdrehung des Betätigungselements 6 relativ zum Druckübertragungselement, welches selbst gegen Verdrehung gesichert ist, vergrößert sich die Bauteillänge des Verbundes aus dem Betätigungselement 6 und dem Druckübertragungselement. Hierdurch wird eine Nachstellung der Bremse erreicht. Vorzugsweise ist das Stellelement 2 über eine Gleitlagerung im Gehäuse 5 des Bremssystems drehbar gelagert. Eine Gleitlagerung ist insbesondere einfach herzustellen, kostengünstig und wartungsfrei, sofern ausreichende Schmiermittelversorgung gewährleistet ist. An seinem vom zweiten Eingriffsbereich 24 beabstandet angeordneten ersten Eingriffsbereich 22 greift das Stellelement 2 in einen ersten Haltebereich 42 der Halteeinheit 4 ein. Dabei ist in der bevorzugten Ausführungsform der erste Eingriffsbereich 24 als Aussparung ausgebildet, während der erste Haltebereich 42 als zumindest in seiner radialen Erstreckung um die Stellachse S korrespondierender Vorsprung ausgebildet ist. Für eine Montierbar- und Demontierbarkeit ist vorzugsweise dabei das Stellelement 2 durch einen Sprengring, welcher in eine entsprechende Nut am Gehäuse 5 eingreift, gegen Verlagerung längs der Stellachse S gesichert. Für eine Montage des Nachstellers wird somit vorzugsweise zunächst das Stellelement 2 in die dafür vorgesehene Aussparung am Gehäuse 5 eingesetzt, wobei anschließend der Sprengring in der dafür vorgesehenen Nut installiert wird. Anschließend wird die Halteeinheit 4 in den außenliegenden Abschnitt der Aussparung am Gehäuse 5 eingesetzt und gegebenenfalls durch einen Schraubverschluss oder einen weiteren Sprengring, wie dargestellt, gegen Verlagerung, insbesondere nach unten in Figur 1, relativ zur Stellachse S gesichert. Der erste Haltebereich 42 ist dabei an einem hülsenförmig ausgebildeten Bauteil ausgebildet, welches einen nach radial außen weisenden Kragen aufweist. An diesem Kragen des Bauteils, welches den ersten Haltebereich 42 umfasst greift auf der zum Stellelement 2 weisenden Seite ein Rückstellmittel 7 an und auf der vom Stellelement 2 abgewandten Seite ist eine Kupplung zwischen dem den ersten Haltebereich 42 aufweisenden Bauteil und dem den zweiten Haltebereich 44 aufweisenden Bauteil vorgesehen. Der zweite Haltebereich 44 dient insbesondere der Festlegung der Halteeinheit 4 am Gehäuse 5 des Bremssystems. Hierfür kann der zweite Haltebereich 44 vorzugsweise als Nut-Feder-Verbindung ausgebildet sein. Alternativ bevorzugt kann der zweite Haltebereich 44 auch in einer Klemmverbindung zwischen der Halteeinheit 4 und dem Gehäuse 5 bestehen, wobei diese Klemmverbindung gleichzeitig auch als Überlastkupplung fungieren kann. Insbesondere lässt sich durch eine entsprechende Überdimensionierung des den zweiten Haltebereich 44 aufweisenden Bauteils das von der Überlastkupplung zu tragende Drehmoment einstellen. Weiterhin bevorzugt weist die Halteeinheit 4 einen Rücksteller 8 auf, welcher im Bereich eines dritten Eingriffsbereiches 26 des Stellelements 2 aus dem Gehäuse 5 ragt. Der Rücksteller 8 ist dabei dafür ausgelegt, das den ersten Haltebereich 42 aufweisende Bauteil derart mit einer Kraft zu beaufschlagen, dass die Rückstellkraft des Rückstellmittels 7 überwunden wird und der in der Kupplung 45 zwischen dem ersten Haltebereich 42 und dem zweiten Haltebereich 44 bestehende Formschluss aufgelöst wird.

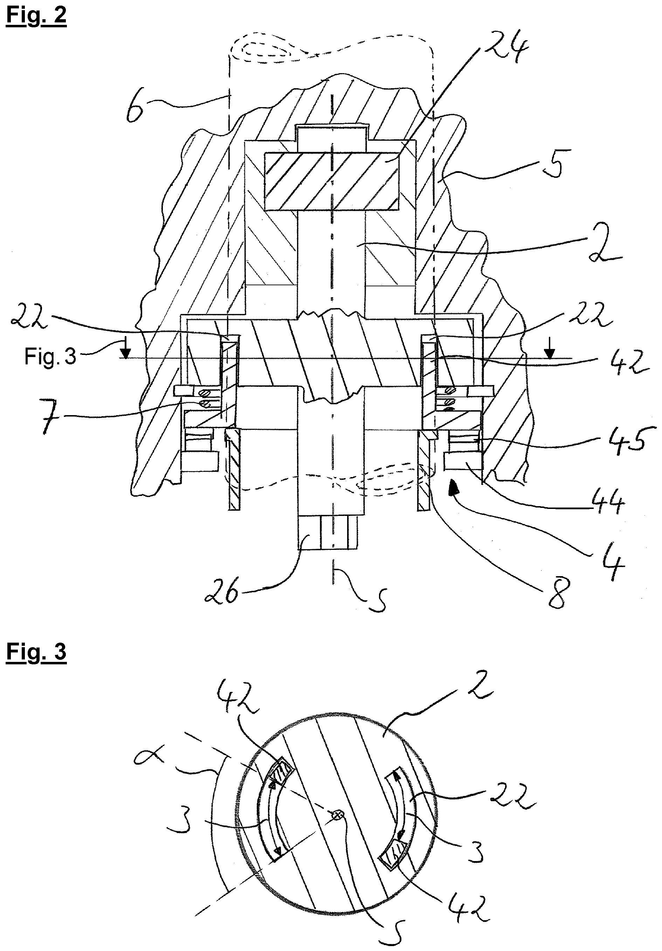

Fig. 2 zeigt eine im Bereich des Nachstellers geschnittene Ansicht einer bevorzugten Ausführungsform eines erfindungsgemäßen Nachstellers. Dabei ist gezeigt, dass im Gegensatz zu der in Fig. 1 gezeigten Ausführungsform, die Betätigungsachse, entlang derer das Betätigungselement 6 verschoben wird, im Wesentlichen parallel zu Stellachse S ausgerichtet ist. In Betrachtungsrichtung von Fig. 2 gesehen, liegt das Betätigungselement 6 unterhalb des Nachstellers. Diese Ausführungsform eines Nachstellers eignet sich insbesondere für Scheibenbremsen, bei welchen der Nachsteller in den oberen Teil des Bremssattels integriert werden kann. Die Ausgestaltung der Halteeinheit 4 und des Stellelements 2 sind im Wesentlichen identisch zu der in Fig. 1 gezeigten Ausführungsform. Leidglich das Gehäuse 5 kann, im Unterschied zu Fig. 1, das Gehäuse eines Bremssattels oder einer Trommelbremsbetätigung sein.

Fig. 3 zeigt die in Fig. 2 gekennzeichnete Schnittansicht durch das Stellelement 2 im Bereich des ersten Eingriffsbereiches 22 und des ersten Haltebereiches 42. Diese Schnittansicht ergibt sich auch bei einem Schnitt durch die Ausführungsform von Fig. 1, auf gleicher Höhe und orthogonal zur Stellachse S. Dabei wird die kreisringsegmentförmige Erstreckung des ersten Eingriffsbereiches 22 verdeutlicht. Darüber hinaus ist gezeigt, dass vorzugsweise zwei erste Eingriffsbereiche 22 und zwei dazu korrespondierende erste Haltebereiche 42 vorgesehen sind. In weiteren bevorzugten Ausführungsformen können selbstverständlich auch drei, oder vier erste Haltebereiche 42 und dazu korrespondierende erste Eingriffsbereiche 22 vorgesehen sein. Insbesondere sollte dabei aber die Größe bzw. der flächenmäßige Anteil der als Aussparungen ausgebildeten ersten Eingriffsbereiche 22 oder ersten Haltebereiche 42 nicht zu groß werden, um eine übermäßige Materialschwächung am Stellelement 2 und an dem den ersten Haltebereich 42 aufweisenden Bauteil zu verhindern. Besonders bevorzugt ist das Spiel 3 erkennbar, welches eine Verdrehung des ersten Haltebereiches 42 innerhalb des ersten Eingriffsbereiches 22 um die Stellachse S, mit einem Spielwinkel α ermöglicht. Dieses Spiel 3 dient dabei der Bereitstellung des erforderlichen Lüftspiels des Bremssystemes. Bei der in Fig. 3 gezeigten bevorzugten Ausführungsform ist das Spiel 3 vorzugsweise ungefähr ein Dreifaches der umfänglichen Erstreckung des ersten Haltebereiches 42 um die Stellachse S. Mit anderen Worten weist der erste Eingriffsbereich 22 somit eine umfängliche Erstreckung um die Stellachse S auf, welche ein Vierfaches der umfänglichen Erstreckung um die Stellachse S des ersten Haltebereiches 42 ist.
- 2: - Stellelement
- 3: - Spiel
- 4: - Halteeinheit
- 5: - Gehäuse
- 6: - Betätigungselement
- 7: - Rückstellelement
- 8: - Rücksteller
- 22: - erster Eingriffsbereich
- 24: - zweiter Eingriffsbereich
- 26: - dritter Eingriffsbereich
- 42: - erster Haltebereich
- 44: - zweiter Haltebereich
- 45: - Kupplung
- α: - Spielwinkel
- S: - Stellachse

## Patentansprüche

1. Nachsteller für ein Bremssystem, insbesondere eine Trommelbremse, umfassend ein Stellelement (2) und eine Halteeinheit (4),
wobei das Stellelement (2) um eine Stellachse (S) drehbar und gegen Verlagerung längs der Stellachse (S) gesichert ist,
wobei die Halteeinheit (4) einen ersten Haltebereich (42) und einen zweiten Haltebereich (44) aufweist,
wobei der erste Haltebereich (42) mit einem ersten Eingriffsbereich (22) des Stellelements (2) in Eingriff bringbar ist, um ein Drehmoment um die Stellachse (S) zu übertragen,
wobei der zweite Haltebereich (44) direkt oder indirekt an einem Gehäuse (5) festgelegt und gegen Verdrehung um die Stellachse (S) gesichert ist,
wobei zwischen dem ersten Haltebereich (42) und dem ersten Eingriffsbereich (22) ein Spiel (3) vorgesehen ist, innerhalb dessen eine Drehung des Stellelements (2) relativ zur Halteeinheit (4) um die Stellachse (S) möglich ist,
wobei der Spielwinkel (α) Werte von 3° bis 30° annimmt.

2. Nachsteller nach Anspruch 1,
wobei der Eingriff zwischen dem ersten Eingriffsbereich (22) und dem ersten Haltebereich (42) formschlüssig ist.

3. Nachsteller nach einem der vorhergehenden Ansprüche,
wobei das Stellelement (2) an seinem, dem ersten Eingriffsbereich (22) gegenüberliegend angeordneten Ende einen zweiten Eingriffsbereich (24) aufweist,
wobei der zweite Eingriffsbereich (24) mit einem Betätigungselement (6) eines Bremssystems in Eingriff steht, wobei zwischen dem Betätigungselement (6) und dem zweiten Eingriffsabschnitt (24) ein Schraubradgetriebe gebildet ist.

4. Nachsteller nach Anspruch 3,
wobei eine Verlagerung des Betätigungselements (6) relativ zum Stellelement (2) eine Verdrehung des Stellelements (2) um die Stellachse (S) verursacht,
wobei hierbei eine Verlagerung des Stellelements (2) längs der Stellachse (S) im Wesentlichen verhindert ist.

5. Nachsteller nach einem der vorhergehenden Ansprüche,
wobei eine Drehung des Stellelements (2) um einen Spielwinkel (α) ohne Drehmomentübertragung an die Halteeinheit (4) stattfindet,
wobei bei einer Drehung des Stellelements (2) um einen Winkel, welcher größer als der Spielwinkel (α) ist, ein Formschluss zwischen dem ersten Eingriffsbereich (22) und dem ersten Haltebereich (42) gebildet ist, über welchen ein Drehmoment zwischen dem Stellelement (2) und der Halteeinheit (4) übertragbar ist.

6. Nachsteller nach einem der vorhergehenden Ansprüche,
wobei die Halteeinheit (4) eine Kupplung (45) aufweist, welche eine Drehbewegung des ersten Haltebereiches (42) relativ zum zweiten Haltebereich (44) in nur einer Drehrichtung um die Stellachse (S) verhindert.

7. Nachsteller nach Anspruch 6,
wobei die Kupplung (45) eine Planverzahnung aufweist, welche derart ausgebildet ist, dass in einer ersten Umfangsrichtung um die Stellachse (S) ein sich selbst verstärkender formschlüssiger Eingriff zwischen den Haltebereichen (42, 44) hergestellt ist,
wobei in der zweiten Umfangsrichtung um die Stellachse (S) die Haltebereiche (42, 44) unter Überwinden eines geringen Widerstandes gegeneinander drehbar sind.

8. Nachsteller nach Anspruch 7,
wobei die Planverzahnung im Querschnitt sägezahnförmige Vorsprünge und dazu korrespondierende Rücksprünge aufweist.

9. Nachsteller nach einem der Ansprüche 6 bis 8,
wobei ein Rückstellmittel (7) vorgesehen ist, welches den ersten Haltebereich (42) gegen den zweiten Haltebereich (44) vorspannt, um einen Formschluss in der Kupplung (45) zu halten.

10. Nachsteller nach Anspruch 9,
wobei ein Rücksteller (8) vorgesehen ist, welcher ausgelegt ist, eine Kraft auf den ersten Haltebereich (42) zu übertragen, um den formschlüssigen Eingriff zwischen dem ersten und dem zweiten Haltebereich (42, 44) zu lösen,
wobei die Kraft der vom Rückstellmittel (7) aufgebrachten Kraft entgegenwirkt.

11. Nachsteller nach einem der vorhergehenden Ansprüche,
wobei der erste Eingriffsbereich (22) als Aussparung ausgebildet ist und wobei der erste Haltebereich (42) als Vorsprung ausgebildet ist, dessen radiale Erstreckung im Wesentlichen gleich der radialen Erstreckung des ersten Haltebereiches (42) ist.

12. Nachsteller nach einem der vorhergehenden Ansprüche,
wobei der erste Eingriffsbereich (22) als Aussparung ausgebildet ist und wobei der erste Haltebereich (42) als Vorsprung ausgebildet ist,
wobei die umfängliche Erstreckung des ersten Eingriffsbereiches (22) um die Stellachse (S) größer als ein 1,5-faches der umfänglichen Erstreckung des ersten Haltebereiches (42) um die Stellachse (S) ist.

13. Nachsteller nach Anspruch 12,
wobei die umfängliche Erstreckung des ersten Eingriffsbereiches (22) ein 1,5- bis 4-faches und vorzugsweise ein 2- bis 2,5-faches der umfänglichen Erstreckung des ersten Haltebereiches (42) ist.

14. Nachsteller nach einem der vorhergehenden Ansprüche,
wobei das Stellelement (2) einen dritten Eingriffsbereich (26) aufweist, welcher zum Eingriff mit einem Werkzeug durch einen Anwender ausgelegt ist.

15. Nachsteller nach Anspruch 10 und Anspruch 14,
wobei der Rücksteller (8) derart angeordnet ist, dass er beim Ansetzen des Werkzeuges an den dritten Eingriffsbereich (26) betätigt wird.

## Claims

1. Adjuster for a brake system, in particular a drum brake, comprising an actuating element (2) and a holding unit (4),
the actuating element (2) being rotatable about an actuating axis (S) and being secured against movement along the actuating axis (S),
the holding unit (4) having a first holding region (42) and a second holding region (44),
it being possible for the first holding region (42) to be brought into engagement with a first engagement region (22) of the actuating element (2), in order to transmit a torque about the actuating axis (S),
the second holding region (44) being fixed directly or indirectly on a housing (5) and being secured against rotation about the actuating axis (S),
a play (3) being provided between the first holding region (42) and the first engagement region (22), within which play (3) a rotation of the actuating element (2) relative to the holding unit (4) about the actuating axis (S) is possible,
the play angle (α) assuming values of from 3° to 30°.

2. Adjuster according to Claim 1,
the engagement between the first engagement region (22) and the first holding region (42) being positively locking.

3. Adjuster according to either of the preceding claims,
the actuating element (2) having a second engagement region (24) at its end which is arranged so as to lie opposite the first engagement region (22), the second engagement region (24) being in engagement with an activating element (6) of a brake system, a helical gear mechanism being formed between the activating element (6) and the second engagement section (24).

4. Adjuster according to Claim 3,
a movement of the activating element (6) relative to the actuating element (2) causing a rotation of the actuating element (2) about the actuating axis (S),
a movement of the actuating element (2) along the actuating axis (S) being substantially prevented here.

5. Adjuster according to one of the preceding claims,
a rotation of the actuating element (2) about a play angle (α) taking place without a transmission of torque to the holding unit (4),
a positively locking connection being formed between the first engagement region (22) and the first holding region (42) in the case of a rotation of the actuating element (2) about an angle which is greater than the play angle (α), via which positively locking connection a torque can be transmitted between the actuating element (2) and the holding unit (4).

6. Adjuster according to one of the preceding claims,
the holding unit (4) having a coupling (45) which prevents a rotational movement of the first holding region (42) relative to the second holding region (44) in only one rotational direction about the actuating axis (S) .

7. Adjuster according to Claim 6,
the coupling (45) having a crown toothing system which is configured in such a way that a self-boosting positively locking engagement between the holding regions (42, 44) is established in a first circumferential direction about the actuating axis (S),
it being possible for the holding regions (42, 44) to be rotated with respect to one another in the second circumferential direction about the actuating axis (S) with a slight resistance being overcome.

8. Adjuster according to Claim 7,
the crown toothing system having, in cross section, sawtooth-shaped projections and recesses which correspond with the former.

9. Adjuster according to one of Claims 6 to 8,
a restoring means (7) being provided which prestresses the first holding region (42) against the second holding region (44), in order to uphold a positively locking connection in the coupling (45).

10. Adjuster according to Claim 9,
a restorer (8) being provided which is designed to transmit a force to the first holding region (42), in order to release the positively locking engagement between the first and the second holding region (42, 44), the force counteracting the force which is applied by the restoring means (7).

11. Adjuster according to one of the preceding claims,
the first engagement region (22) being configured as a cut-out, and the first holding region (42) being configured as a projection, the radial extent of which is substantially identical to the radial extent of the first holding region (42).

12. Adjuster according to one of the preceding claims,
the first engagement region (22) being configured as a cut-out, and the first holding region (42) being configured as a projection,
the circumferential extent of the first engagement region (22) about the actuating axis (S) being greater than 1.5 times the circumferential extent of the first holding region (42) about the actuating axis (S).

13. Adjuster according to Claim 12,
the circumferential extent of the first engagement region (22) being from 1.5 to 4 times and preferably from 2 to 2.5 times the circumferential extent of the first holding region (42).

14. Adjuster according to one of the preceding claims,
the actuating element (2) having a third engagement region (26) which is designed for engagement with a tool by way of an operator.

15. Adjuster according to Claim 10 and Claim 14,
the restorer (8) being arranged in such a way that it is actuated in the case of the tool being attached to the third engagement region (26).

## Revendications

1. Dispositif de rattrapage de jeu pour un système de frein, en particulier un frein à tambour, comportant un élément de réglage (2) et un ensemble de retenue (4),
dans lequel
l'élément de réglage (2) est mobile en rotation autour d'un axe de réglage (S) et est bloqué à l'encontre d'un déplacement le long de l'axe de réglage (S),
l'ensemble de retenue (4) comprend une première zone de retenue (42) et une seconde zone de retenue (44),
la première zone de retenue (42) peut être amenée en engagement avec une première zone d'engagement (22) de l'élément de réglage (2), afin de transmettre un couple de rotation autour de l'axe de réglage (S),
la seconde zone de retenue (44) est immobilisée directement ou indirectement sur un boîtier (5) et est bloquée à l'encontre d'une rotation autour de l'axe de réglage (S),
un jeu (3) est prévu entre la première zone de retenue (2) et la première zone d'engagement (22), jeu à l'intérieur duquel une rotation de l'élément de réglage (2) par rapport à l'ensemble de retenue (4) autour de l'axe de réglage (S) est possible, l'angle (α) du jeu prenant des valeurs de 3° à 30°.

2. Dispositif de rattrapage de jeu selon la revendication 1,
dans lequel
l'engagement entre la première zone d'engagement (22) et la première zone de retenue (42) s'effectue par coopération de forme.

3. Dispositif de rattrapage de jeu selon l'une des revendications précédentes,
dans lequel
à son extrémité disposée à l'opposé de la première zone d'engagement (22), l'élément de réglage (2) présente une seconde zone d'engagement (24), la seconde zone d'engagement (24) étant en engagement avec un élément d'actionnement (6) d'un système de frein, une transmission à engrenages hélicoidiaux étant formée entre l'élément d'actionnement (6) et la seconde zone d'engagement (24).

4. Dispositif de rattrapage de jeu selon la revendication 3,
dans lequel
un déplacement de l'élément d'actionnement (6) par rapport à l'élément de réglage (2) provoque une rotation de l'élément de réglage (2) autour de l'axe de réglage (S) en empêchant sensiblement un déplacement de l'élément de réglage (2) le long de l'axe de réglage (S).

5. Dispositif de rattrapage de jeu selon l'une des revendications précédentes,
dans lequel
une rotation de l'élément de réglage (2) d'un angle de jeu (α) s'effectue sans transmission du couple de rotation à l'ensemble de retenue (4),
lors d'une rotation de l'élément de réglage (2) d'un angle supérieur à l'angle de jeu (α), une coopération de forme s'établit entre la première zone d'engagement (22) et la première zone de retenue (42) et permet de transmettre un couple de rotation entre l'élément de réglage (2) et l'ensemble de retenue (4).

6. Dispositif de rattrapage de jeu selon l'une des revendications précédentes,
dans lequel
l'ensemble de retenue (4) présente un coupleur (45) qui empêche un mouvement de rotation de la première zone de retenue (42) par rapport à la seconde zone de retenue (44) uniquement dans une direction de rotation autour de l'axe de réglage (S).

7. Dispositif de rattrapage de jeu selon la revendication 6,
dans lequel
le coupleur (45) présente une denture plane qui est réalisée de telle sorte que dans une première direction périphérique autour de l'axe de réglage (S), il s'établit un engagement auto-amplificateur par coopération de forme entre les zones de retenue (42, 44),
dans la seconde direction périphérique autour de l'axe de réglage (S), les zones de retenue (42, 44) peuvent tourner l'une par rapport à l'autre en surmontant une petite résistance.

8. Dispositif de rattrapage de jeu selon la revendication 7,
dans lequel
la denture plane présente en section transversale des saillies en forme de dents de scie et des retraits correspondants.

9. Dispositif de rattrapage de jeu selon l'une des revendications 6 à 8,
dans lequel
il est prévu un moyen de rappel (7) qui met sous précontrainte la première zone de retenue (42) contre la seconde zone de retenue (44) pour maintenir une coopération de forme dans le coupleur (45).

10. Dispositif de rattrapage de jeu selon la revendication 9,
dans lequel
il est prévu un organe de rappel (8) qui est conçu pour transmettre une force à la première zone de retenue (42) afin de défaire l'engagement par coopération de forme entre la première et la seconde zone de retenue (42, 44), ladite force s'opposant à la force exercée par le moyen de rappel (7).

11. Dispositif de rattrapage de jeu selon l'une des revendications précédentes,
dans lequel
la première zone d'engagement (22) est réalisée sous forme d'échancrure et la première zone de retenue (42) est réalisée sous forme de saillie dont l'extension radiale est sensiblement identique à l'extension radiale de la première zone de retenue (42).

12. Dispositif de rattrapage de jeu selon l'une des revendications précédentes,
dans lequel
la première zone d'engagement (22) est réalisée sous forme d'échancrure et la première zone de retenue est réalisée sous forme de saillie, et
l'extension périphérique de la première zone d'engagement (22) autour de l'axe de réglage (S) est 1,5 fois supérieure à l'extension périphérique de la première zone de retenue (42) autour de l'axe de réglage (S).

13. Dispositif de rattrapage de jeu selon la revendication 12,
dans lequel
l'extension périphérique de la première zone d'engagement (22) et de 1,5 à 4 fois et de préférence de 2 à 2,5 fois l'extension périphérique de la première zone de retenue (42).

14. Dispositif de rattrapage de jeu selon l'une des revendications précédentes,
dans lequel
l'élément de réglage (2) présente une troisième zone d'engagement (26) qui est conçue pour l'engagement avec un outil par un utilisateur.

15. Dispositif de rattrapage de jeu selon la revendication 10 et la revendication 14,
dans lequel
l'organe de rappel (8) est disposé de manière à être actionné lors de l'application de l'outil contre la troisième zone d'engagement (26).
